# EUROPEAN PATENT SPECIFICATION

(11) **EP 2 792 398 B1**
(45) Date of publication and mention of the grant of the patent: **01.11.2017**
(21) Application number: 12858149.3
(22) Date of filing: 14.12.2012
(51) Int. Cl.: B01D 53/22, B01J 23/42, B01J 37/02

(54) **DEVICE FOR PERMEATION OF CARBON DIOXIDE AND METHOD FOR TRANSPORT OF CARBON DIOXIDE**
KOHLENDIOXIDDURCHLÄSSIGE VORRICHTUNG UND KOHLENDIOXIDTRANSPORTVERFAHREN
DISPOSITIF DE PERMÉATION DU DIOXYDE DE CARBONE ET PROCÉDÉ DE TRANSPORT DU DIOXYDE DE CARBONE

(30) Priority: 15.12.2011 JP 2011274718
(43) Date of publication of application: 22.10.2014
(73) Proprietor: Panasonic Corporation, Kadoma-shi, Osaka 571-8501 (JP); Japan Science and Technology Agency, Kawaguchi-shi Saitama 332-0012 (JP)
(72) Inventor: KAMAI, Ryo, Osaka 540-6207 (JP); SUZUKA, Michio, Osaka 540-6207 (JP); NAKANISHI, Shuji, Osaka 540-6207 (JP); HASHIMOTO, Kazuhito, Tokyo 113-8656 (JP); HELLER, Adam, Austin, Texas 78712-0231 (US)
(74) Representative: Müller-Boré & Partner Patentanwälte PartG mbB
(86) International application number: PCT/JP2012/082472
(87) International publication number: WO 2013/089221

(56) References cited:
- EP-A1- 2 145 668
- EP-A1- 2 740 710
- JP-A- H0 199 632
- JP-A- H1 128 331
- JP-A- 2000 234 190
- JP-A- 2000 234 190
- JP-A- 2004 073 978
- JP-A- 2004 239 657
- JP-A- 2010 021 141
- JP-B2- S6 259 184
- US-A1- 2009 159 456
- US-A1- 2009 233 155

## Description

The present invention relates to devices allowing permeation of carbon dioxide by causing electrochemical reactions of oxygen evolution/oxygen reduction, and methods of transporting carbon dioxide by causing electrochemical reactions of oxygen evolution/oxygen reduction.

Carbon dioxide which occupies 0.04% of the air is widely present on the earth and is widely used industrially. Specific examples of industrial applications of carbon dioxide include carbonated drinks, bath additives, foaming gas (e.g., a fire extinguishing agent), dry ice for cooling, and emergency air for a bicycle. Besides, supercritical carbon dioxide is used for an extraction solvent for caffeine and carbon dioxide laser equipment (e.g., laser equipment used for treatment in an industrial field and laser equipment used as a medical laser scalpel). Moreover, carbon dioxide is used as an alternative to a fluorocarbon refrigerant and is used in a CO₂ refrigerant compressor.

Furthermore, in an agricultural field, carbon dioxide is used as a carbon dioxide fertilizer to accelerate growth of a plant (e.g., an aquatic plant in an ornamental aquarium), for example, a carbon dioxide fertilizer for forcing of strawberries, and is also used for controlled atmosphere storage for fresh agricultural products.

Then, various techniques have been proposed for extracting carbon dioxide from gas by allowing permeation of carbon dioxide in the gas.

In the past, proposed have been techniques for increasing a carbon dioxide concentration by allowing permeation or the like of carbon dioxide in the gas such as a technique of using a facilitating transport membrane as described in non Patent Literature 1 and a technique of using a solid molten salt as described in Patent Literature 1. The facilitating transport membrane described in non Patent Literature 1 utilizes differences between permeation rates of porous polymer membranes.

However, in order to make carbon dioxide permeate through the facilitated carbon dioxide transport membrane described in non Patent Literature 1, it is required to pressurize gas for feeding carbon dioxide to a pressure higher than about 200 kPa and to depressurize gas for receiving carbon dioxide. Moreover, in the case of using the solid molten salt disclosed by Patent Literature 1, it is required to retain a temperature of the molten salt as high as 600°C to operate a device using the molten salt.

As described above, there has been no device for enabling permeation of carbon dioxide using lowered energy consumption without requiring large-scale apparatus.

US 2009/233155 A1 describes the use of ionic liquids for the separation of carbon dioxide from gas streams.

EP 2 145 668 A1 discloses a method for separating carbon dioxide from other gases using immobilized buffers.

JP 2000 234190 A discloses a carbon dioxide concentrating method and a device therefor.

EP 2 740 710 A1 discloses a carbon dioxide enrichment device.

### Citation List

### Patent Literature

Patent Literature 1:JP 11-28331 A

### Non Patent Literature

Non Patent Literature 1: R. Yegani et. al., J. Membr. Sci., 291, 157 (2007).

The present invention has been made in view of the above circumstances and the object thereof is to provide a carbon dioxide permeation device which has high carbon dioxide permeability and can operate with greatly lowered energy, and a method of transporting carbon dioxide with high efficiency using the carbon dioxide permeation device.

The subject matter of the present invention is characterized in the claims. A carbon dioxide permeation device in accordance with one aspect of the present invention includes a first gas diffusion electrode, a second gas diffusion electrode, an electrolyte membrane, a DC power source, and a catalyst. The electrolyte membrane is in contact with and between the first gas diffusion electrode and the second gas diffusion electrode and is an anion exchange membrane. The DC power source is configured to apply a voltage between the first gas diffusion electrode and the second gas diffusion electrode. The carbon dioxide permeation device is configured to: accelerate absorption of carbon dioxide into the electrolyte membrane from gas in a vicinity of the first gas diffusion electrode by causing an electrochemical reaction so as to decrease a carbon dioxide concentration of the gas in the vicinity of the first gas diffusion electrode; and accelerate emission of carbon dioxide from the electrolyte membrane to gas in a vicinity of the second gas diffusion electrode by causing an oxidation reaction of water in the electrolyte membrane so as to enrich carbon dioxide in the gas in the vicinity of the second gas diffusion electrode.

A method of transporting carbon dioxide in accordance with one aspect of the present invention including steps of: preparing a carbon dioxide permeation device including a first gas diffusion electrode, a second gas diffusion electrode, an electrolyte membrane which is in contact with and between the first gas diffusion electrode and the second gas diffusion electrode and is an anion exchange membrane, a DC power source configured to apply a voltage between the first gas diffusion electrode and the second gas diffusion electrode, and a catalyst; and selecting the first gas diffusion electrode and the second gas diffusion electrode as a cathode and an anode, respectively and applying the voltage between the first gas diffusion electrode and the second gas diffusion electrode to accelerate absorption of carbon dioxide into the electrolyte membrane from gas in a vicinity of the first gas diffusion electrode and to accelerate emission of carbon dioxide from the electrolyte membrane to gas in a vicinity of the second gas diffusion electrode by causing an oxidation reaction of water in the electrolyte membrane, wherein the electrolyte membrane has opposite faces which are in contact with the first gas diffusion electrode and the second gas diffusion electrode, respectively; and the catalyst is supported on at least one of the opposite faces of the electrolyte membrane.

According to one aspect of the present invention, provided is a carbon dioxide permeation device which has high carbon dioxide permeability and can operate with greatly lowered energy.

Besides, according to one aspect of the present invention, provided is a method of transporting carbon dioxide with high efficiency using the carbon dioxide permeation device.

### Brief Description of Drawings

FIG. 1 is a schematic cross-sectional view showing an embodiment of the present invention;
FIG. 2 is a schematic cross-sectional view showing a carbon dioxide permeation device having microporous layers according to another configuration example of the embodiment shown in FIG. 1; and
FIG. 3 is a schematic cross-sectional view showing another embodiment of the present invention.

A carbon dioxide permeation device in accordance with one aspect of the present invention includes a first gas diffusion electrode, a second gas diffusion electrode, an electrolyte membrane, a DC power source, and a catalyst. The electrolyte membrane is in contact with and between the first gas diffusion electrode and the second gas diffusion electrode and is an anion exchange membrane. The DC power source is configured to apply a voltage between the first gas diffusion electrode and the second gas diffusion electrode. The carbon dioxide permeation device accelerates absorption of carbon dioxide into the electrolyte membrane from gas in a vicinity of the first gas diffusion electrode so as to decrease a carbon dioxide concentration of the gas in the vicinity of the first gas diffusion electrode, and accelerates emission of carbon dioxide from the electrolyte membrane to gas in a vicinity of the second gas diffusion electrode so as to enrich carbon dioxide in the gas in the vicinity of the second gas diffusion electrode, by causing an electrochemical reaction.

According to the present invention, the carbon dioxide permeation device includes a catalyst, the electrolyte membrane has opposite faces which are in contact with the first gas diffusion electrode and the second gas diffusion electrode, respectively, and the catalyst is supported on at least one of the opposite faces of the electrolyte membrane.

In one aspect of the present invention, it is preferable that at least one of the first gas diffusion electrode and the second gas diffusion electrode includes a microporous layer which is in contact with the electrolyte membrane.

According to a first aspect of the present invention, there is provided a carbon dioxide permeation device including a first gas diffusion electrode, a second gas diffusion electrode, an electrolyte membrane, a DC power source, and a catalyst. The electrolyte membrane is in contact with and between the first gas diffusion electrode and the second gas diffusion electrode and is an anion exchange membrane. The DC power source is configured to apply the voltage between the first gas diffusion electrode and the second gas diffusion electrode. The carbon dioxide permeation device in accordance with the present aspect is configured to: accelerate absorption of carbon dioxide into the electrolyte membrane from gas in a vicinity of the first gas diffusion electrode so as to decrease the carbon dioxide concentration of the gas in the vicinity of the first gas diffusion electrode; and accelerate emission of carbon dioxide from the electrolyte membrane to gas in a vicinity of the second gas diffusion electrode so as to enrich carbon dioxide in the gas in the vicinity of the second gas diffusion electrode, by application of the voltage from the DC power source.

In this regard, the gas in the vicinity of the first gas diffusion electrode is defined as gas in contact with an opposite face of the first gas diffusion electrode from a face of the first gas diffusion electrode in contact with the electrolyte membrane. Besides, the gas in the vicinity of the second gas diffusion electrode is defined as gas in contact with an opposite face of the second gas diffusion electrode from a face of the second gas diffusion electrode in contact with the electrolyte membrane.

The DC power source is preferably configured to apply between the first gas diffusion electrode and the second gas diffusion electrode a voltage which causes an oxygen reduction reaction at the first gas diffusion electrode and an oxidation reaction of water at the second gas diffusion electrode.

According to the present invention, the carbon dioxide permeation device includes a catalyst, and the electrolyte membrane has opposite faces which are in contact with the first gas diffusion electrode and the second gas diffusion electrode, respectively; and the catalyst is supported on at least one of the opposite faces of the electrolyte membrane.

According to a third aspect of the present invention, there is provided a carbon dioxide permeation device further including an O₂ reduction catalyst, in which: the electrolyte membrane has a face in contact with the first gas diffusion electrode; and the O₂ reduction catalyst is supported on the face of the electrolyte membrane, the carbon dioxide permeation device being in accordance with the first aspect.

In this regard, the O₂ reduction catalyst catalyses the following O₂ reduction reactions.

O₂ + 4H⁺ + 4e- → 2H₂O

O₂ + 2H₂O + 4e⁻ → 40H⁻

According to a fourth aspect of the present invention, there is provided a carbon dioxide permeation device including an O₂ evolution catalyst, in which: the electrolyte membrane has a further face in contact with the second gas diffusion electrode; and the O₂ evolution catalyst is supported on the further face of the electrolyte membrane, the carbon dioxide permeation device being in accordance with the first or third aspect.

In this regard, the O₂ evolution catalyst catalyses the following O₂ evolution reaction. The O₂ evolution reaction is also the oxidation reaction of water.

2H₂O → O₂ + 4H⁺ + 4e⁻

According to a fifth aspect of the present invention, there is provided a carbon dioxide permeation device further including a set of an O₂ reduction catalyst and an O₂ evolution catalyst and a further set of an O₂ reduction catalyst and an O₂ evolution catalyst, in which: the electrolyte membrane has a face in contact with the first gas diffusion electrode and a further face in contact with the second gas diffusion electrode; the set of the O₂ reduction catalyst and the O₂ evolution catalyst is supported on the face of the electrolyte membrane; the further set of the O₂ reduction catalyst and the O₂ evolution catalyst is supported on the further face of the electrolyte membrane; and the DC power source is configured to alter polarity of the voltage applied between the first gas diffusion electrode and the second gas diffusion electrode.

According to a sixth aspect of the present invention, there is provided a carbon dioxide permeation device in which at least one of the first gas diffusion electrode and the second gas diffusion electrode includes a microporous layer which is in contact with the electrolyte membrane, the carbon dioxide permeation device being in accordance with any one of the first and third to fifth aspects.

According to a seventh aspect of the present invention, there is provided a carbon dioxide permeation device further including a first gas holding chamber configured to accommodate gas which is in contact with the first gas diffusion electrode, the carbon dioxide permeation device being in accordance with any one of the first and third to sixth aspects.

According to an eighth aspect of the present invention, there is provided a carbon dioxide permeation device further including a second gas holding chamber configured to accommodate gas which is in contact with the second gas diffusion electrode, the carbon dioxide permeation device being in accordance with any one of the first and third to seventh aspects.

According to a ninth aspect of the present invention, there is provided a carbon dioxide permeation device further including a water supplier for supplying water to the electrolyte membrane, the carbon dioxide permeation device being in accordance with any one of the first and third to eighth aspects.

According to a tenth aspect of the present invention, there is provided a method of transporting carbon dioxide including steps of: preparing a carbon dioxide permeation device including a first gas diffusion electrode, a second gas diffusion electrode, an electrolyte membrane which is in contact with and between the first gas diffusion electrode and the second gas diffusion electrode and is an anion exchange membrane, a DC power source configured to apply a voltage between the first gas diffusion electrode and the second gas diffusion electrode, and a catalyst; and selecting the first gas diffusion electrode and the second gas diffusion electrode as a cathode and an anode, respectively and applying the voltage between the first gas diffusion electrode and the second gas diffusion electrode to accelerate absorption of carbon dioxide into the electrolyte membrane from gas in a vicinity,of the first gas diffusion electrode and to accelerate emission of carbon dioxide from the electrolyte membrane to gas in a vicinity of the second gas diffusion electrode by causing an oxidation reaction of water in the electrolyte membrane, wherein the electrolyte membrane has opposite faces which are in contact with the first gas diffusion electrode and the second gas diffusion electrode, respectively; and the catalyst is supported on at least one of the opposite faces of the electrolyte membrane.

According to an eleventh aspect of the present invention, there is provided a method of transporting carbon dioxide further including a step of selecting the first gas diffusion electrode and the second gas diffusion electrode as the anode and the cathode, respectively and applying the voltage between the first gas diffusion electrode and the second gas diffusion electrode to accelerate absorption of carbon dioxide into the electrolyte membrane from the gas in the vicinity of the second gas diffusion electrode and to accelerate emission of carbon dioxide from the electrolyte membrane to the gas in the vicinity of the first gas diffusion electrode, by causing the oxidation reaction of the water in the electrolyte membrane.

More specific embodiments of the present invention will be described below.

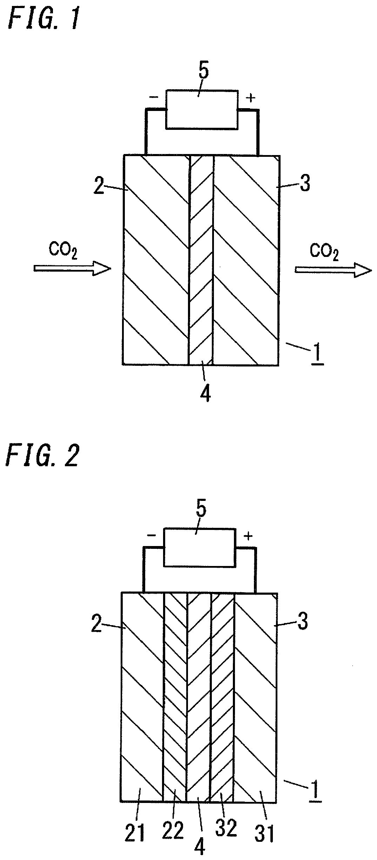

FIG. 1 shows a carbon dioxide permeation device **1** of an embodiment. The carbon dioxide permeation device **1** includes a first gas diffusion electrode **2,** a second gas diffusion electrode **3,** an electrolyte membrane **4,** and a DC power source **5.**

The DC power source **5** is connected to the first gas diffusion electrode **2** and the second gas diffusion electrode **3.** The first gas diffusion electrode **2** is connected to a negative electrode of the DC power source **5,** and the second gas diffusion electrode **3** is connected to a positive electrode of the DC power source **5.** The DC power source **5** is provided with a switch for selecting whether to start or end power supply from the DC power source **5.** The carbon dioxide permeation device **1** is configured to start to operate when the switch is operated to start the power supply.

The electrolyte membrane **4** is present between the first gas diffusion electrode **2** and the second gas diffusion electrode **3,** and the first gas diffusion electrode **2** and the second gas diffusion electrode **3** are in contact with the electrolyte membrane **4.** Three-phase interfaces of an electrode (solid phase), the electrolyte membrane **4** (solid phase), and gas (gas phase) containing carbon dioxide and oxygen are present at the individual first and second gas diffusion electrodes **2** and **3.** Hence, a cell reaction may occur.

Each of the first gas diffusion electrode **2** and the second gas diffusion electrode 3 is preferably composed of a porous electrical conductor. In order to increase a reactive area, it is preferable that the porous electrical conductor has a greater specific surface area. The specific surface area of the porous electrical conductor is preferably 1 m²/g or more, is more preferably 100 m²/g or more, and is much more preferably 500 m²/g or more, the specific surface area being determined by the BET method. When the porous electrical conductor has the specific surface area of less than 1 m²/g determined by the BET method, a total area of the three-phase interfaces is small, therefore a reaction amount is likely to be small, and the carbon dioxide permeability is not sufficient. Besides, it is preferable that the porous electrical conductor has smaller surface resistance in order to decrease a voltage loss due to the surface resistance. The surface resistance is preferably than 1 kΩ or less, and is more preferably 200 Ω or less. Preferable examples of the porous electrical conductor include carbon sheet, carbon cloth, and carbon paper.

Each of the first gas diffusion electrode **2** and the second gas diffusion electrode **3** preferably includes a microporous layer. The microporous layer overlies a surface of the electrical conductor close to the electrolyte membrane **4.**

FIG. 2 shows another configuration example of the carbon dioxide permeation device **1** shown in FIG. 1. In the carbon dioxide permeation device **1** shown in FIG. 2, the first gas diffusion electrode **2** includes an electrical conductor **21** and a microporous layer **22,** and the second gas diffusion electrode **3** includes an electrical conductor **31** and a microporous layer **32.**

In this regard, the microporous layer is a layer including a plurality of voids (pores) inside the layer. The plurality of voids (pores) have a diameter of about 10 µm, for example.

The microporous layer is preferably formed of electrically conductive carbon particles. Examples of the electrically conductive carbon particles include graphite powder, activated carbon, carbon powder (e.g., carbon black, vulcan XC-72R, acetylene black, furnace black, denka black, ketjenblack, and oil furnace black), carbon fibers, carbon nanotube, carbon nanohorn, carbon nano clusters, and metal doped fullerene. One type of these electrically conductive carbon particles may be used alone, or a mixture of two or more types thereof may be used.

The microporous layer preferably contains a fluorine resin. In this case, water produced in the first gas diffusion electrode **2** and moisture produced through condensation in an adjacent region to the first gas diffusion electrode **2** are more likely to be discharged from the first gas diffusion electrode **2,** and water produced in the second gas diffusion electrode **3** and moisture produced through condensation in an adjacent region to the second gas diffusion electrode **3** are more likely to be discharged from the second gas diffusion electrode **3.** Accordingly, a decrease in carbon dioxide permeability of each of the first gas diffusion electrode **2** and the second gas diffusion electrode **3** is suppressed. Examples of the fluorine resin include polytetrafluoroethylene (PTFE), poly(vinylidene fluoride) (PVDF), polyvinyl fluoride (PVF), polychlorotrifluoroethylene (PCTFE), perfluoroalkoxy fluorine resin (PFA), tetrafluoroethylene-hexafluoropropylene copolymer (FEP), ethylene-tetrafluoroethylene copolymer (ETFE), and ethylene-cholorotrifluoroethylene copolymer (ECTFE). One type of these fluorine resins may be used alone, or a mixture of two or more types of these fluorine resins may be used. A proportion by mass of the fluorine resin to the electrically conductive carbon particles in the microporous layer preferably ranges from 0.05 to 0.6. This proportion by mass regarding the fluorine resin more preferably ranges from 0.1 to 0.3.

The microporous layer is formed by, for example, disposing the electrically conductive carbon particles on the electrical conductor so as to form a layer. In this case, the microporous layer is formed by applying onto the electrical conductor a slurry containing, for example, the electrically conductive carbon particles and an appropriate binder, then drying the slurry, and further burning it as requested. The electrical conductor is preferably subjected to water-repellent treatment, prior to application of the slurry. The binder is preferably an anion-type resin (e.g., AS-4 (item number) available from Tokuyama Corporation).

In the case where the microporous layer contains the fluorine resin, the microporous layer may be formed of powder containing the electrically conductive carbon particles, the fluorine resin, and an appropriate binder, for example. The binder is preferably an anion-type resin (e.g., AS-4 (item number) available from Tokuyama Corporation). To obtain the powder, the electrically conductive carbon particles, the fluorine resin, and the binder are compounded, and then a hydrophilic organic solvent (e.g., N-methylpyrrolidone) which dissolves the fluorine resin is added thereto. These components are mixed and the fluorine resin is dissolved in the hydrophilic organic solvent in order to prepare a slurry. The slurry is pelletized with a spray drier or the like. Consequently, obtained may be the powder containing the electrically conductive carbon particles, the fluorine resin, and the binder. The powder is provided on the electrical conductor so as to form a layer and then hot pressed or the like. Thus, the microporous layer may be prepared.

The thickness of the microporous layer is appropriately selected, but the thickness preferably ranges from 10 to 100 µm.

The thicknesses of the first gas diffusion electrode **2** and the second gas diffusion electrode **3** are appropriately selected, but each thickness preferably ranges from 100 to 500 µm in view of improving gas permeability and robustness. Moreover, in order to facilitate discharge of carbon dioxide through the second gas diffusion electrode **3,** the thickness of the second gas diffusion electrode **3** is preferably smaller and preferably ranges from 100 to 300 µm.

The electrolyte membrane **4** is an anion-conducting electrolyte membrane. In general, the electrolyte membrane **4** may be any anion-type electrolyte membrane. According to the present invention, the electrolyte membrane **4** is an anion exchange membrane. The anion exchange membrane is capable of allowing selective permeation of anions. Note that the electrolyte membrane **4** does not necessarily allow permeation of only anions. Namely, the electrolyte membrane **4** may be composed of: a dielectric membrane having micropores such as a separator for an electric double-layer capacitor; and an anion-conducting resin (e.g., resin having a quaternary ammonium salt at an end thereof) held on the dielectric membrane.

The carbon dioxide permeation device includes such an electrolyte membrane **4,** and therefore unbalance of charges between the first gas diffusion electrode **2** and the second gas diffusion electrode **3** caused by the cell reaction is compensated by only migration of anions through the electrolyte membrane **4.** In other words, HCO₃⁻ is more likely to migrate from the first gas diffusion electrode **2** to the second gas diffusion electrode **3.**

The electrolyte membrane **4** is not particularly limited, but may be "AMX", "AHA", "ACM", "A201", or "A901" (all neoceptor series) available from Tokuyama Corporation. Out of these, as the electrolyte membrane **4,** preferably used is an anion-type electrolyte membrane "A201" available from Tokuyama Corporation.

The catalyst is supported on at least one of the opposite faces of the electrolyte membrane which are in contact with the first gas diffusion electrode and the second gas diffusion electrode, respectively. Since a catalyst is supported on the electrolyte membrane **4,** a good contact between the catalyst and the electrolyte membrane **4** is made. That is, it is possible to decrease contact resistance between the catalyst and the electrolyte membrane **4,** and therefore to decrease an overpotential of an electrolytic reaction.

A catalyst is supported on the face, which is in contact with the first gas diffusion electrode **2,** of the electrolyte membrane **4,** and the catalyst preferably includes the O₂ reduction catalyst. The O₂ reduction catalyst catalyses the following O₂ reduction reactions.

O₂ + 4H⁺ + 4e⁻ → 2H₂O

O₂ + 2H₂O + 4e⁻ → 4OH⁻

Preferable examples of the O₂ reduction catalyst include at least one type of metal selected from Sc, Ti, V, Cr, Mn, Fe, Co, Ni, Cu, Zr, Nb, Mo, Ru, Rh, Pd, Ag, Ir, Pt, and Au that are transition metals capable of functioning as adsorption sites for oxygen, an alloy containing at least one type of these metals, a complex containing at least one type of these metals, a compound containing at least one type of these metals as a dopant, carbon alloy, carbon nanotube, and graphite.

Alternatively, as the O₂ reduction catalyst, preferably used is a carbon-based material doped with metal atoms and nitrogen atoms. This carbon-based material has excellent electrical conductivity and high catalytic activity, and therefore it is possible to increase the efficiency in the electrolysis. Such a carbon-based material may be: graphene doped with metal atoms and nitrogen atoms; graphene oxide doped with metal atoms and nitrogen atoms; graphite doped with metal atoms and nitrogen atoms; graphite oxide doped with metal atoms and nitrogen atoms; or alkyl modified graphite doped with metal atoms and nitrogen atoms.

The metal with which the carbon-based material is doped is not particularly limited, but preferable examples of the metal include at least one type of metal selected from titanium (Ti), vanadium (V), chromium (Cr), manganese (Mn), iron (Fe), cobalt (Co), nickel (Ni), copper (Cu), zirconium (Zr), niobium (Nb), molybdenum (Mo), ruthenium (Ru), rhodium (Rh), palladium (Pd), silver (Ag), hafnium (Hf), tantalum (Ta), tungsten (W), rhenium (Re), osmium (Os), iridium (Ir), platinum (Pt), and gold (Au).

The carbon-based material preferably has an element proportion of nitrogen to carbon falling within a range of 0.1 to 0.2 by mol. Besides, the carbon-based material preferably has an element proportion of metal to nitrogen of 0.03 or more and much more preferably has the element proportion of metal to nitrogen of 0.05 or more by mol. The carbon content, the nitrogen content, and the metal content of the carbon-based material are measured by X-ray photoelectron spectroscopy. In this regard, prior to measurement of the metal content of the carbon-based material, the carbon-based material is preferably washed with acid to remove metal and a metal compound attached to the carbon-based compound.

It is preferable that a nitrogen atom is coordinated to a metal atom in the carbon-based material. Moreover, it is preferable that a percentage of the metal atom to which the nitrogen atom is coordinated in the whole carbon-based material is 0.4 mol% or more, and that a percentage of the nitrogen atom in the whole carbon-based material is 6 mol% or more.

The carbon-based material may contain one type or two types or more of metal atoms.

In order to improve catalytic performance, the carbon-based material preferably has an electrical conductivity of 0.1 S/cm or more. Besides, in order to improve the catalytic performance, the carbon-based material preferably has a specific surface area of 200 m²/g or more.

The catalyst supported on the face, which is in contact with the first gas diffusion electrode **2,** of the electrolyte membrane **4** preferably includes a catalyst for promoting the following acid-base reaction.

CO₂ + H₂O → H⁺ + HCO₃⁻

When a catalyst is supported on the face (further face), which is in contact with the second gas diffusion electrode **3,** of the electrolyte membrane **4,** the catalyst preferably includes the O₂ evolution catalyst. The O₂ evolution catalyst catalyses the following O₂ evolution reaction.

2H₂O → O₂ + 4H⁺ + 4e⁻

Preferable examples of the O₂ evolution catalyst include at least one type of metal selected from Sc, Ti, V, Cr, Mn, Fe, Co, Ni, Cu, Zr, Nb, Mo, Ru, Rh, Pd, Ag, Ir, Pt, and Au that are transitions metals, an alloy containing at least one type of these metals, a complex containing at least one type of these metals, a compound doped with at least one type of these metals, carbon alloy, carbon nanotube, and graphite, too.

Alternatively, as the O₂ evolution catalyst, preferably used is the same carbon-based material doped with metal atoms and nitrogen atoms as the O₂ reduction catalyst.

The catalyst supported on the face, which is in contact with the second gas diffusion electrode **3,** of the electrolyte membrane **4** preferably includes a catalyst for promoting the following acid-base reaction.

H⁺ + HCO₃⁻ → H₂CO₃ → H₂O + CO₂

The catalyst is supported on the electrolyte membrane **4** by an appropriate method. For example, available is a method of directly applying onto the electrolyte membrane **4** a solution or dispersion (hereinafter, referred to as a catalyst ink) containing the catalyst. Alternatively, available is a method (transfer method) of applying the catalyst ink onto an appropriate transfer substrate to form a film (catalyst film) containing the catalyst on the transfer substrate and subsequently transferring the catalyst film to the electrolyte membrane **4** from the transfer substrate. The transfer method is particularly preferable out of these methods. Owing to using the transfer method, it is possible to suppress swelling of the electrolyte membrane **4** with a solvent or a dispersion medium of the catalyst ink. Therefore, deformation of the electrolyte membrane **4** is suppressed.

The material of the transfer substrate used in the transfer method is not particularly limited, but may be: a polymer film made of polyethylene terephthalate, polyester, polyimide, polyamide, polypropylene, or the like; coated paper; or glass. Polyethylene terephthalate and polyester are particularly preferable out of these.

The transfer substrate may be provided with a release layer on its surface, and the catalyst ink may be applied on the release layer. The release layer may be a fluorine resin-based coating or a silicone-based coating.

The catalyst ink is applied onto the substrate by an appropriate method. For example, adopted may be a wet process such as ink jetting, dip coating, bar coating, doctor blading, die coating, spraying, roll-coating, screen printing, and flexographic printing. The catalyst film may be prepared by applying the catalyst ink onto the transfer substrate and thereafter drying it. The catalyst ink applied on the transfer substrate is preferably dried at a temperature ranging from 20°C to 100°C, and more preferably at a temperature ranging from 30°C to 60°C. The catalyst film preferably has a thickness ranging from 10 to 50 µm.

Transfer of the catalyst film to the electrolyte membrane **4** from the transfer substrate may be performed by overlaying the electrolyte membrane **4** with the catalyst film, which is formed on the transfer substrate, and heating them with they being pressed against each other. Heating and pressing may be performed with common techniques such as hot pressing. A pressure and a temperature in the step of heating and pressing are not particularly limited. However, the pressure preferably ranges from 0.1 to 20 MPa, and more preferably ranges from 1 to 5 MPa. The heating temperature preferably ranges from 100°C to 200°C. The heating temperature is selected in accordance with a glass transition temperature of the electrolyte membrane **4,** and it is preferable in usual that the heating temperature is higher than the glass transition temperature by about 10°C to about 50°C.

The voltage is applied between the first gas diffusion electrode **2** and the second gas diffusion electrode **3** via an external circuit by the DC power source **5.** This application voltage is required to be sufficient for causing the oxygen reduction reaction at the first gas diffusion electrode **2** (cathode) and causing the oxidation reaction of water at the second gas diffusion electrode **3** (anode). The application voltage is preferably selected in a range in which water electrolysis does not occur. The application voltage is appropriately selected in view of loss such as an IR drop which occurs at an electrode and/or an electrolyte. For example, the application voltage is selected within a range of 1 to 10V.

The carbon dioxide permeation device **1** is operated in a condition that gas containing carbon dioxide is in contact with the first gas diffusion electrode **2.** Therefore, preferable is a greater contact area between the first gas diffusion electrode **2** and an external atmosphere.

In the present embodiment, the first gas diffusion electrode **2** and the second gas diffusion electrode **3** are in contact with the opposite faces of the electrolyte membrane **4,** respectively, and therefore a drop in the voltage (IR drop) which occurs between the first gas diffusion electrode **2** and the second gas diffusion electrode **3** is extremely decreased. Hence, the voltage loss due to the IR drop is decreased.

The carbon dioxide permeation device **1** of the present embodiment is operated by applying the voltage between the first gas diffusion electrode **2** and the second gas diffusion electrode **3** by the DC power source **5** in a condition that the first gas diffusion electrode **2** is in contact with gas that contains carbon dioxide, oxygen, and water vapor. In this case, the reaction represented by the following equation occurs. In this reaction, oxygen in the gas in contact with the first gas diffusion electrode **2** is reduced by the water vapor in the gas in contact with the first gas diffusion electrode **2** or the second gas diffusion electrode **3.** Accordingly, OH⁻ is produced in the adjacent region to the first gas diffusion electrode **2.**

O₂ + 2H₂O + 4e⁻ → 4OH⁻

Subsequently, a reaction represented by the following equation occurs at the first gas diffusion electrode **2.** The reaction involves carbon dioxide in the gas in contact with the first gas diffusion electrode **2** and the hydroxide ion OH⁻ produced in the above reaction, and produces HCO₃⁻.

CO₂ + OH⁻ → HCO₃⁻

In parallel with this reaction, an acid-base reaction represented by the following equation occurs in the vicinity of the first gas diffusion electrode **2.** In this acid-base reaction, carbon dioxide in the gas in contact with the first gas diffusion electrode **2** reacts with water in the electrolyte membrane **4** so as to cause hydration and ionization. Accordingly, HCO₃⁻ is produced. Note that the water in the electrolyte membrane **4** is derived from the water vapor in the gas in contact with the first gas diffusion electrode **2** or the second gas diffusion electrode **3,** and has been captured in the electrolyte membrane **4** by swelling of the electrolyte membrane **4.**

CO₂ + H₂O → H⁺ + HCO₃⁻

These reactions cause acceleration of absorption of carbon dioxide in the gas in the vicinity of the first gas diffusion electrode **2** into the electrolyte membrane **4.** Note that, in this case, the term "acceleration" means that an amount of absorption of carbon dioxide becomes greater than an amount of normal absorption of carbon dioxide into the electrolyte membrane **4** in a condition where no voltage is applied between the first gas diffusion electrode **2** and the second gas diffusion electrode **3.**

When the O₂ reduction catalyst is supported on the face, which is in contact with the first gas diffusion electrode **2,** of the electrolyte membrane **4,** the aforementioned electrochemical O₂ reduction is extremely promoted. Accordingly, a generation rate of OH⁻ to react with carbon dioxide in the gas is increased, and therefore the absorption efficiency of carbon dioxide is further improved. Besides, when the acid-base reaction catalyst is supported on the face, which is in contact with the first gas diffusion electrode **2,** of the electrolyte membrane **4,** ionization of CO₂ having reacted with the water is extremely promoted. Accordingly, equilibrium of the acid-base reaction in which carbon dioxide in the gas is hydrated and ionized tends to shift to the right, and therefore the absorption efficiency of carbon dioxide is further improved.

The abovementioned reaction amount increases with an increase in the carbon dioxide concentration of the gas in contact with the first gas diffusion electrode **2,** and therefore a current value of the carbon dioxide permeation device **1** is increased.

The bicarbonate ions HCO₃⁻ produced in these reactions reach the second gas diffusion electrode **3** through the electrolyte membrane **4.** At the second gas diffusion electrode **3,** the following reaction occurs in which the water in the electrolyte membrane **4** is oxidized to evolve O₂.

2H₂O → O₂ + 4H⁺ + 4e⁻

This reaction causes an increase in a hydrogen ion H⁺ concentration in the adjacent region to the second gas diffusion electrode **3.** This promotes the following acid-base reaction involving a hydrogen ion and a bicarbonate ion HCO₃⁻. Accordingly, carbon dioxide is produced. This causes acceleration of emission of carbon dioxide into the gas in contact with the second gas diffusion electrode **3** from the electrolyte membrane **4.** Note that, in this case, the term "acceleration" means that an amount of emission of carbon dioxide becomes greater than an amount of normal emission of carbon dioxide into the electrolyte membrane **4** in a condition where no voltage is applied between the first gas diffusion electrode **2** and the second gas diffusion electrode **3.**

H⁺ + HCO₃⁻ → H₂CO₃ → H₂O + CO₂

When the O₂ evolution catalyst is supported on the face, which is in contact with the second gas diffusion electrode **3,** of the electrolyte membrane **4,** the O₂ evolution reaction resulting from the abovementioned electrochemical oxidation of water is extremely promoted. Accordingly, equilibrium of the acid-base reaction of producing carbon dioxide tends to shift to the right, and therefore the carbon dioxide emission efficiency is further improved.

As described above, carbon dioxide permeates efficiently from the gas in contact with the first gas diffusion electrode **2** to the gas in contact with the second gas diffusion electrode **3.** Accordingly, the carbon dioxide concentration of the gas in contact with the first gas diffusion electrode **2** is decreased and thus enrichment of carbon dioxide in the gas in contact with the second gas diffusion electrode **3** is performed. In this regard, the term "enrichment" means that a concentration of a particular gas is made greater than that in an initial condition.

Note that when the carbon dioxide concentration in the gas in the vicinity of the second gas diffusion electrode **3** is high, the following reaction is more likely to occur. This reaction is a reverse reaction in the equilibrium reaction.

H₂O + CO₂ → H⁺ + HCO₃⁻

Accordingly, an overpotential of the reaction at the second gas diffusion electrode **3** functioning as the anode becomes great. Therefore, in order to increase the reaction amount with the same voltage, the carbon dioxide concentration in the gas in the vicinity of the second gas diffusion electrode **3** is preferably lower, and is preferably 5% or less. Besides, in order to decrease the carbon dioxide concentration, it is preferable to provide a unit to cause a gas flow in the vicinity of the second gas diffusion electrode **3.**

With the carbon dioxide permeation device **1,** when carbon dioxide in gas at a room temperature supplied to the first gas diffusion electrode **2** functioning as the cathode permeates through the carbon dioxide permeation device **1,** carbon dioxide emitted through the second gas diffusion electrode **3** functioning as the anode tends to have a temperature equal to a room temperature. In this regard, carbon dioxide is absorbed chemically into the carbon dioxide permeation device **1** to produce ions, and the ions migrate through the carbon dioxide permeation device **1** by means of concentration diffusion of HCO₃⁻ and electrophoresis by electrostatic force in the electrolyte membrane **4.** Hence, it is possible to transport carbon dioxide without supplying enormous energy.

With the carbon dioxide permeation device **1** configured as described above, it is possible to extract carbon dioxide from the gas containing carbon dioxide. Thus-obtained carbon dioxide can be used industrially.

The carbon dioxide permeation device **1** can be used for exhaust of CO₂ from a closed space such as a room without an opening, an airplane, a submersible, and a space ship, CO₂ supply for CO₂ bubbling for neutralization in alkaline treatment for plant wastewater, and CO₂ supply for photosynthesis in a plant factory, a greenhouse, and the like.

In the present embodiment, the first gas diffusion electrode **2** and the second gas diffusion electrode **3** are selected as the cathode and the anode, respectively, and the DC power source **5** is configured to apply the voltage between the anode and the cathode. Note that, the first gas diffusion electrode **2** and the second gas diffusion electrode **3** may be selected as the anode and the cathode, respectively, and the DC power source **5** may be configured to apply the voltage between the cathode and the anode. In other words, the DC power source **5** may be configured to alter polarity of the voltage applied between the first gas diffusion electrode **2** and the second gas diffusion electrode **3.** In order to alter the polarity, the DC power source **5** is provided with, for example, a switch for selecting to start or end power supply from the DC power source **5** and selecting a current direction. In this case, when the first gas diffusion electrode **2** and the second gas diffusion electrode **3** are selected as the anode and the cathode, respectively and the DC power source **5** applies the voltage between this cathode and this anode, accelerated is absorption of carbon dioxide into the electrolyte membrane **4** from the gas in the vicinity of the first gas diffusion electrode **2.** Therefore, the carbon dioxide concentration of this gas is decreased. Besides, accelerated is emission of carbon dioxide from the electrolyte membrane **4** to the gas in the vicinity of the second gas diffusion electrode **3** by causing the oxidation reaction of the water in the electrolyte membrane **4.** Therefore, carbon dioxide in this gas is enriched. In summary, a carbon dioxide permeating direction is reversed. That is, selection of the polarity of the voltage applied by the DC power source **5** leads to selection of the carbon dioxide permeating direction of the carbon dioxide permeation device **1.** Hence, the carbon dioxide permeation device **1** can transport carbon dioxide from a first gas diffusion electrode **2** side to a second gas diffusion electrode **3** side, and also can transport carbon dioxide from the second gas diffusion electrode 3 side to the first gas diffusion electrode **2** side.

The following description is made to a further preferable embodiment in the case where the DC power source **5** is configured to alter the polarity of the voltage between the first gas diffusion electrode **2** and the second gas diffusion electrode **3.** In this embodiment, the electrolyte membrane **4** has the face in contact with the first gas diffusion electrode **2** and the further face in contact with the second gas diffusion electrode **3,** and it is preferable that the carbon dioxide permeation device **1** further includes the set of an O₂ reduction catalyst and an O₂ evolution catalyst and the further set of an O₂ reduction catalyst and an O₂ evolution catalyst, and that the set of the O₂ reduction catalyst and the O₂ evolution catalyst is supported on the face of the electrolyte membrane **4** while the further set of the O₂ reduction catalyst and the O₂ evolution catalyst is supported on the further face of the electrolyte membrane **4.** Accordingly, in the both cases where the DC power source **5** applies the voltage between the first gas diffusion electrode **2** and the second gas diffusion electrode **3** selected as the cathode and the anode respectively and where the DC power source **5** applies the voltage between the first gas diffusion electrode **2** and the second gas diffusion electrode **3** selected as the anode and the cathode respectively, carbon dioxide can permeate efficiently. In this regard, a catalyst that functions as both of the O₂ reduction catalyst and the O₂ evolution catalyst may be supported on the face, which is in contact with the first gas diffusion electrode **2,** of the electrolyte membrane **4.** Besides, a catalyst that functions as both of the O₂ reduction catalyst and the O₂ evolution catalyst may be supported on the face (further face), which is in contact with the second gas diffusion electrode **3,** of the electrolyte membrane **4.**

Preferable examples of the catalyst that functions as the O₂ reduction catalyst and the O₂ evolution catalyst include: at least one type of metal selected from Sc, Ti, V, Cr, Mn, Fe, Co, Ni, Cu, Zr, Nb, Mo, Ru, Rh, Pd, Ag, Ir, Pt, and Au that are transition metals; an alloy containing at least one type of these metals; a complex containing at least one type of these metals: a compound doped with at least one type of these metals; carbon alloy; carbon nanotube; and graphite. Alternatively, as the catalyst, preferably used is a carbon-based material doped with metal atoms and nitrogen atoms. Such a carbon-based material may be: graphene doped with metal atoms and nitrogen atoms; graphene oxide doped with metal atoms and nitrogen atoms; graphite doped with metal atoms and nitrogen atoms; graphite oxide doped with metal atoms and nitrogen atoms; or alkyl modified graphite doped with metal atoms and nitrogen atoms. The metal with which the carbon-based material is doped is not particularly limited, but preferably includes at least one type of metal selected from titanium (Ti), vanadium (V), chromium (Cr), manganese (Mn), iron (Fe), cobalt (Co), nickel (Ni), copper (Cu), zirconium (Zr), niobium (Nb), molybdenum (Mo), ruthenium (Ru), rhodium (Rh), palladium (Pd), silver (Ag), hafnium (Hf), tantalum (Ta), tungsten (W), rhenium (Re), osmium (Os), iridium (Ir), platinum (Pt), and gold (Au).

The carbon dioxide permeation device may further include at least one of the first gas holding chamber and the second gas holding chamber. The first gas holding chamber is configured to accommodate gas which is (to be) in contact with the carbon dioxide permeation device. The second gas holding chamber is configured to accommodate gas which is (to be) in contact with the second gas diffusion electrode.

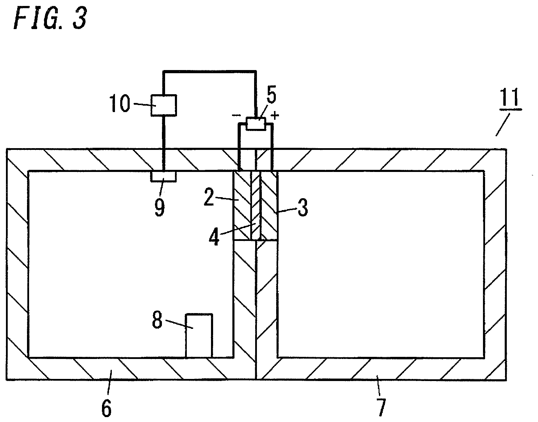

The carbon dioxide permeation device **11** shown in FIG. 3 is different from the carbon dioxide permeation device **1** shown in FIG. 1 in that the carbon dioxide permeation device **11** further includes a first gas holding chamber **6** and a second gas holding chamber **7.** When the DC power source **5** applies the voltage between the first gas diffusion electrode **2** and the second gas diffusion electrode **3** in the carbon dioxide permeation device **11,** carbon dioxide is transported from the first gas holding chamber **6** to the second gas holding chamber **7.** Accordingly, the carbon dioxide concentration in the first gas holding chamber **6** can be decreased, and the carbon dioxide concentration in the second gas holding chamber **7** can be increased.

The carbon dioxide permeation device **11** may be used in appropriate applications. For example, gas with a high carbon dioxide concentration is produced in the second gas holding chamber **7** of the carbon dioxide permeation device **11,** and the gas can be industrially used as appropriate.

In a case where the first gas holding chamber **6** is a closed facility where the carbon dioxide concentration is likely to be increased such as a room without an opening, an airplane, a submersible, and a space ship, the carbon dioxide permeation device **11** drives to decrease the carbon dioxide concentration in the first gas holding chamber **6.** Accordingly, the carbon dioxide concentration in the first gas holding chamber **6** is kept at an appropriate condition. In this case, the carbon dioxide permeation device **11** may not include the second gas holding chamber **7,** and the second gas diffusion electrode **3** may be exposed to outside air.

In a case where the second gas holding chamber **7** is a facility where carbon dioxide is consumed such as a plant factory and a greenhouse, the carbon dioxide permeation device **11** operates to increase the carbon dioxide concentration in the second gas holding chamber **7.** Accordingly, the carbon dioxide is supplied to the second gas holding chamber **7.** In this case, the carbon dioxide permeation device **11** may not include the first gas holding chamber **6,** and the first gas diffusion electrode **2** may be exposed to outside air.

The carbon dioxide permeation device **11** preferably includes the water supplier configured to supply water to the electrolyte membrane **4.** In this case, it is possible to suppress a shortage of water involved with the electrochemical reaction in the electrolyte membrane **4.** Accordingly, carbon dioxide is transported more efficiently using the carbon dioxide permeation device **1.**

Note that the carbon dioxide permeation device **1** shown in FIG. 1 may further include the water supplier.

The water supplier may be a unit configured to vaporize or atomize water and sprinkle the resultant water. As such a unit, adopted may be a known unit such as a spray to spray water, an ultrasonic atomizer to ultrasonically atomize water and sprinkle the resultant water, an electrostatic atomizer to atomize water by causing discharge and sprinkle the resultant water, and a vaporizer to vaporize water by heating and sprinkle the resultant water.

Such a water supplier is configured to sprinkle vaporized or atomized water into the gas in contact with the first gas diffusion electrode **2** or the gas in contact with the second gas diffusion electrode **3,** for example. Accordingly, the water is supplied to the electrolyte membrane **4.**

The carbon dioxide permeation device **11** shown in FIG. 3 includes the water supplier, namely, a unit **8** configured to vaporize or atomize water and sprinkle the vaporized or atomized water. Accordingly, the vaporized or atomized water is sprinkled to the gas in contact with the first gas diffusion electrode **2,** and is supplied to the electrolyte membrane **4.** Such a unit **8** may be provided in the second gas holding chamber **7.**

As the water supplier, adopted may be a cooler to cool the electrolyte membrane **4.** In this case, the electrolyte membrane **4** is cooled by the cooler, and therefore moisture is provided to the electrolyte membrane **4.** Consequently, water is supplied to the electrolyte membrane **4.** The cooler may be any known cooler.

As the water supplier, adopted may be a unit to transport liquid water directly to the electrolyte membrane **4.** For example, the water supplier may include a supply source for water such as a tank to store water and a pipe for connecting this supply source to the electrolyte membrane. In this case, water is supplied to the electrolyte membrane **4** from the supply source via the pipe.

Also in the embodiment shown in FIG. 3, the DC power source **5** may be configured to alter polarity of the voltage applied between the first gas diffusion electrode **2** and the second gas diffusion electrode **3.** In this case, when the first gas diffusion electrode **2** and the second gas diffusion electrode **3** are selected as the anode and the cathode, respectively and the DC power source **5** applies the voltage between the cathode and the anode, the oxygen reduction reaction occurs at the second gas diffusion electrode **3,** and the oxidation reaction of water occurs at the first gas diffusion electrode **2.** As described above, when the reverse bias is applied across the carbon dioxide permeation device **1,** carbon dioxide supplied to the second gas diffusion electrode **3** functioning as the cathode may be emitted outside through the first gas diffusion electrode **2** functioning as the anode. Hence, the carbon dioxide permeation device **11** can transport carbon dioxide from the first gas holding chamber **6** to the second gas holding chamber **7,** and also can transport dioxide from the second gas holding chamber **7** to the first gas holding chamber **6.**

Besides, in the embodiment shown in FIG. 3, the carbon dioxide permeation device **11** may include: a CO₂ gas sensor provided in at least one of the first gas holding chamber **6** and the second gas holding chamber **7;** and a controller to control the DC power source **5** based on a measurement result of a carbon dioxide concentration measured by the CO₂ gas sensor. In this case, the DC power source **5** may be provided with, for example, a switch for selecting whether to start or end power supply from the DC power source **5,** and the switch may be configured to be under the control of the controller. In this case, the carbon dioxide concentration in the first gas holding chamber **6** or the second gas holding chamber **7** may be adjusted based on the measurement result measured by the CO₂ gas sensor. As the CO₂ gas sensor, adopted may be a known system gas sensor such as a solid electrolyte gas sensor and a liquid electrolyte gas sensor.

In the embodiment shown in FIG. 3, a CO₂ gas sensor **9** is provided in the first gas holding chamber **6.** In this case, for example, a controller **10** is configured to: when a measurement value of the carbon dioxide concentration measured by the CO₂ gas sensor **9** is not less than a predetermined value, turn on the DC power source **5;** and when the measurement value of the carbon dioxide concentration is less than the predetermined value, turn off the DC power source **5.** In this case, only in a condition that the carbon dioxide concentration in the first gas holding chamber **6** is higher, the carbon dioxide permeation device is in operation. Therefore, the carbon dioxide concentration in the first gas holding chamber **6** can be adjusted to not more than a predetermined concentration.

When the CO₂ gas sensor is provided in the second gas holding chamber **6**, the controller is configured to; when the measurement value of the carbon dioxide concentration measured by the CO₂ gas sensor is less than a predetermined value, turn on the DC power source **5**; and when the measurement value of the carbon dioxide concentration is not less than the predetermined value, turn off the DC power source **5**. In this case, only in a condition that the carbon dioxide concentration in the first gas holding chamber **7** is lower, the carbon dioxide permeation device **11** is in operation. Hence, the carbon dioxide concentration in the second gas holding chamber **7** can be adjusted to not less than a predetermined concentration.

Besides, the carbon dioxide permeation device **11** shown in FIG. 3 in which the DC power source **5** is configured to alter the polarity of the voltage between the first gas diffusion electrode **2** and the second gas diffusion electrode **3** may further include the CO₂ gas sensor **9** provided in the first gas holding chamber **6** and the controller **10** to control the DC power source **5** based on the measurement result of the carbon dioxide concentration by the CO₂ gas sensor **9.** In this case, the controller **10** is configured to control the DC power source **5** in such a manner that: when a measurement value of the carbon dioxide concentration measured by the CO₂ gas sensor **9** is less than a predetermined range, the first gas diffusion electrode **2** is selected as the cathode and the second gas diffusion electrode **3** is selected as the anode and the voltage is applied between the cathode and the anode; when the measurement value of the carbon dioxide concentration is greater than the predetermined range, the first gas diffusion electrode **2** is selected as the anode and the second gas diffusion electrode **3** is selected as the cathode and the voltage is applied between the cathode and the anode; and when the measurement value of the carbon dioxide concentration falls within the predetermined range, application of the voltage is terminated. In this case, the carbon dioxide concentration in the first gas holding chamber **6** is kept within the predetermined range by the carbon dioxide permeation device **11.**

### Examples

Two pieces (size of 1.5 cm²) of carbon paper subjected to water-repellent treatment with PTFE ("TGP-H-090" available from TORAY INDUSTRIES, INC.) were prepared as a first gas diffusion electrode and a second gas diffusion electrode, respectively.

An anion-type resin solution ("AS-4" available from Tokuyama Corporation), carbon black (vulcan XC-72R), and PTFE were mixed at a solid content weight ratio of 1:2:1 to prepare a mixture. Into the mixture, N-methylpyrrolidone was added so that a percentage by mass of the N-methylpyrrolidone in a solid content of the mixture was 25% to prepare a mixture liquid. This mixture liquid was pelletized with a spray drier ("DL410" available from YAMATO SCIENTIFIC CO., LTD.) to give powder. The powder was disposed on each of the first gas diffusion electrode and the second gas diffusion electrode and hot pressed at 140°C and 3 MPa. Consequently, microporous layers with the thickness of 20 µm were prepared.

As an anion-type electrolyte membrane, prepared was an anion-type electrolyte membrane "A201" (thickness: 28 µm) available from Tokuyama Corporation. Platinum catalysts were supported on individual opposite faces of the anion-type electrolyte membrane at a loaded amount per area of 0.5 mg/cm². For supporting the platinum catalyst, first, a catalyst ink was prepared by mixing platinum supported on carbon black (platinum ratio: 20 mass%, available from Tanaka Kikinzoku Kogyo) and an anion-type resin solution ("AS-4" available from Tokuyama Corporation) at a solid content weight ratio of 1:0.4. The catalyst ink was applied onto the polyester-based transfer substrate ("lumirror #50-S105" available from TORAY INDUSTRIES, INC.) by bar coating. Subsequently, the applied catalyst ink was dried for 12 h under air atmosphere to prepare catalyst films. Thereafter, the catalyst films were disposed on the individual opposite faces of the anion-type electrolyte membrane and then hot pressed at 140°C and 3 MPa for 5 minutes. Consequently, the catalyst films were transferred to the anion-type electrolyte membrane.

Then, a DC power source was prepared. The first gas diffusion electrode was connected to a negative electrode of the DC power source, and the second gas diffusion electrode was connected to a positive electrode of the DC power source. Consequently, the carbon dioxide permeation device was prepared.

The first gas diffusion electrode and the second gas diffusion electrode of the carbon dioxide permeation device were positioned so as to be in contact with enclosed spaces, respectively. Each of the two enclosed spaces was filled with gas having a relative humidity of 85% at 25°C (initial oxygen percentage: 20.9% and initial carbon dioxide percentage: 0.04%). Each of the first gas diffusion electrode and the second gas diffusion electrode was overlaid with a plate. The plate includes: a tortuous groove on its face to be in contact with the gas diffusion electrode; and an opening which communicates with both ends of the groove and is to communicate with the enclosed space. Under these conditions, the gases in the enclosed spaces flowed along the grooves of the plates at a flow rate of 200 mL/min per unit areas of the first gas diffusion electrode and the second gas diffusion electrode.

Under these conditions, the DC power source applies the voltage of 5 V between the first gas diffusion electrode and the second gas diffusion electrode, and thus the carbon dioxide permeation device is in operation. The carbon dioxide concentrations of the gases emitted through the individual plates were measured with a carbon dioxide gas sensor module (available from Hamamatsu Photonics K.K.). A carbon dioxide permeation rate at which carbon dioxide permeates through the carbon dioxide permeation device was calculated based on the measurement results.

As a result of this, the carbon dioxide permeation rate per area was found to be 70 µL/min·cm² in a case of using this carbon dioxide permeation device. This confirms excellent carbon dioxide permeability of the carbon dioxide permeation device.

### Reference Signs List

- 1: Carbon dioxide permeation device
- 2: First gas diffusion electrode
- 3: Second gas diffusion electrode
- 4: Electrolyte membrane
- 5: DC power source

## Claims

1. A carbon dioxide permeation device, comprising:
a first gas diffusion electrode;
a second gas diffusion electrode;
an electrolyte membrane which is in contact with and between the first gas diffusion electrode and the second gas diffusion electrode and is an anion exchange membrane;
a DC power source configured to apply a voltage between the first gas diffusion electrode and the second gas diffusion electrode; and
a catalyst,
the carbon dioxide permeation device being configured to:
accelerate absorption of carbon dioxide into the electrolyte membrane from gas in a vicinity of the first gas diffusion electrode so as to decrease a carbon dioxide concentration of the gas in the vicinity of the first gas diffusion electrode; and
accelerate emission of carbon dioxide from the electrolyte membrane to gas in a vicinity of the second gas diffusion electrode by causing an oxidation reaction of water in the electrolyte membrane so as to enrich carbon dioxide in the gas in the vicinity of the second gas diffusion electrode,
wherein:
the electrolyte membrane has opposite faces which are in contact with the first gas diffusion electrode and the second gas diffusion electrode, respectively; and
the catalyst is supported on at least one of the opposite faces of the electrolyte membrane.

2. The carbon dioxide permeation device according to claim 1,
wherein:
the catalyst includes an O₂ reduction catalyst,
the O₂ reduction catalyst is at least one type of metal selected from Sc, Ti, V, Cr, Mn, Fe, Co, Ni, Cu, Zr, Nb, Mo, Ru, Rh, Pd, Ag, Ir, Pt, and Au; an alloy containing the at least one type of metal; a complex containing the at least one type of metal; a compound doped with the at least one type of metal; carbon alloy; carbon nanotube;
graphite; or carbon-based material doped with metal atoms and nitrogen atoms; and
the O₂ reduction catalyst is supported on the face of the electrolyte membrane which is in contact with the first gas diffusion electrode.

3. The carbon dioxide permeation device according to claim 1 or 2,
wherein:
the catalyst includes an O₂ evolution catalyst,
the O₂ evolution catalyst is at least one type of metal selected from Sc, Ti, V, Cr, Mn, Fe, Co, Ni, Cu, Zr, Nb, Mo, Ru, Rh, Pd, Ag, Ir, Pt, and Au; an alloy containing the at least one type of metal; a complex containing the at least one type of metal; a compound doped with the at least one type of metal; carbon alloy; carbon nanotube;
graphite; or carbon-based material doped with metal atoms and nitrogen atoms; and
the O₂ evolution catalyst is supported on the face of the electrolyte membrane which is in contact with the second gas diffusion electrode.

4. The carbon dioxide permeation device according to claim 1,
wherein:
the catalyst includes a first catalyst that functions as an O₂ reduction catalyst and an O₂ evolution catalyst, and a second catalyst that functions as an O₂ reduction catalyst and an O₂ evolution catalyst,
the first catalyst is supported on the face of the electrolyte membrane which is in contact with the first gas diffusion electrode, and the first catalyst is at least one type of metal selected from Sc, Ti, V, Cr, Mn, Fe, Co, Ni, Cu, Zr, Nb, Mo, Ru, Rh, Pd, Ag, Ir, Pt, and Au; an alloy containing the at least one type of metal; a complex containing the at least one type of metal; a compound doped with the at least one type of metal; carbon alloy; carbon nanotube; graphite; or carbon-based material doped with metal atoms and nitrogen atoms;
the second catalyst is supported on the face of the electrolyte membrane which is in contact with the second gas diffusion electrode, and the second catalyst is at least one type of metal selected from Sc, Ti, V, Cr, Mn, Fe, Co, Ni, Cu, Zr, Nb, Mo, Ru, Rh, Pd, Ag, Ir, Pt, and Au; an alloy containing the at least one type of metal; a complex containing the at least one type of metal; a compound doped with the at least one type of metal; carbon alloy; carbon nanotube; graphite; or carbon-based material doped with metal atoms and nitrogen atoms; and
the DC power source is configured to alter polarity of the voltage applied between the first gas diffusion electrode and the second gas diffusion electrode.

5. The carbon dioxide permeation device according to any one of claims 1 to 4, wherein , at least one of the first gas diffusion electrode and the second gas diffusion electrode includes a microporous layer which is in contact with the electrolyte membrane.

6. The carbon dioxide permeation device according to any one of claims 1 to 5, further comprising
a first gas holding chamber configured to accommodate gas which is in contact with the first gas diffusion electrode.

7. The carbon dioxide permeation device according to any one of claims 1 to 6, further comprising
a second gas holding chamber configured to accommodate gas which is in contact with the second gas diffusion electrode.

8. The carbon dioxide permeation device according to any one of claims 1 to 7, further comprising
a water supplier for supplying the water to the electrolyte membrane.

9. A method of transporting carbon dioxide, comprising steps of:
preparing a carbon dioxide permeation device including
a first gas diffusion electrode,
a second gas diffusion electrode,
an electrolyte membrane which is in contact with and between the first gas diffusion electrode and the second gas diffusion electrode and is an anion exchange membrane,
a DC power source configured to apply a voltage between the first gas diffusion electrode and the second gas diffusion electrode, and
a catalyst; and
selecting the first gas diffusion electrode and the second gas diffusion electrode as a cathode and an anode respectively and applying the voltage between the first gas diffusion electrode and the second gas diffusion electrode to accelerate absorption of carbon dioxide into the electrolyte membrane from gas in a vicinity of the first gas diffusion electrode and to accelerate emission of carbon dioxide from the electrolyte membrane to gas in a vicinity of the second gas diffusion electrode by causing an oxidation reaction of water in the electrolyte membrane,
wherein:
the electrolyte membrane has opposite faces which are in contact with the first gas diffusion electrode and the second gas diffusion electrode, respectively; and
the catalyst is supported on at least one of the opposite faces of the electrolyte membrane.

10. The method of transporting carbon dioxide according to claim 9, further comprising a step of selecting the first gas diffusion electrode and the second gas diffusion electrode as the anode and the cathode, respectively and applying the voltage between the first gas diffusion electrode and the second gas diffusion electrode to accelerate absorption of carbon dioxide into the electrolyte membrane from the gas in the vicinity of the second gas diffusion electrode and to accelerate emission of carbon dioxide from the electrolyte membrane to the gas in the vicinity of the first gas diffusion electrode by causing the oxidation reaction of the water in the electrolyte membrane.

11. The method of transporting carbon dioxide according to claim 9 or 10, wherein the method comprises allowing
permeation of carbon dioxide in gas at a room temperature supplied to the first gas diffusion electrode functioning as the cathode to cause emission of carbon dioxide at a room temperature from the second gas diffusion electrode functioning as the anode.

## Patentansprüche

1. Kohlendioxid-Permeationsvorrichtung, umfassend:
eine erste Gasdiffusionselektrode;
eine zweite Gasdiffusionselektrode;
eine Elektrolytmembran, welche sich in Kontakt mit und zwischen der ersten Gasdiffusionselektrode und der zweiten Gasdiffusionselektrode befindet und eine Anionenaustauschmembran ist;
eine Gleichstromquelle, eingerichtet zum Anlegen einer Spannung zwischen der ersten Gasdiffusionselektrode und der zweiten Gasdiffusionselektrode; und einen Katalysator,
wobei die Kohlendioxid-Permeationsvorrichtung eingerichtet ist zum:
Beschleunigen der Absorption von Kohlendioxid in die Elekrolytmembran aus Gas in einer Umgebung der ersten Gasdiffusionselektrode zum Vermindern einer Kohlendioxidkonzentration des Gases in der Umgebung der ersten Gasdiffusionselektrode; und
Beschleunigen der Emission von Kohlendioxid von der Elektrolytmembran in Gas in einer Umgebung der zweiten Gasdiffusionselektrode durch Herbeiführen einer Oxidationsreaktion von Wasser in der Elektrolytmembran zum Anreichern von Kohlendioxid in dem Gas in der Umgebung der zweiten Gasdiffusionselektrode,
wobei:
die Elektrolytmembran gegenüberliegende Seiten aufweist, welche sich jeweils in Kontakt mit der ersten Gasdiffusionselektrode und der zweiten Gasdiffusionselektrode befinden; und
der Katalysator auf mindestens einer der gegenüberliegenden Seiten der Elektrolytmembran geträgert ist.

2. Kohlendioxid-Permeationsvorrichtung nach Anspruch 1,
wobei:
der Katalysator einen O₂-Reduktionskatalysator einschließt,
der O₂-Reduktionskatalysator mindestens eine Art von Metall, ausgewählt aus Sc, Ti, V, Cr, Mn, Fe, Co, Ni, Cu, Zr, Nb, Mo, Ru, Rh, Pd, Ag, Ir, Pt und Au; eine Legierung, enthaltend die mindestens eine Art von Metall; ein Komplex, enthaltend die mindestens eine Art von Metall; eine Verbindung, dotiert mit der mindestens einen Art von Metall; Kohlenstofflegierung; Kohlenstoff-Nanoröhrchen; Graphit; oder kohlenstoffbasiertes Material, dotiert mit Metallatomen und Stickstoffatomen, ist; und
der O₂-Reduktionskatalysator auf der Seite der Elektrolytmembran, welche sich in Kontakt mit der ersten Gasdiffusionselektrode befindet, geträgert ist.

3. Kohlendioxid-Permeationsvorrichtung nach Anspruch 1 oder 2,
wobei:
der Katalysator einen O₂-Freisetzungskatalysator einschließt,
der O₂-Freisetzungskatalysator mindestens eine Art von Metall, ausgewählt aus Sc, Ti, V, Cr, Mn, Fe, Co, Ni, Cu, Zr, Nb, Mo, Ru, Rh, Pd, Ag, Ir, Pt und Au; eine Legierung, enthaltend die mindestens eine Art von Metall; ein Komplex, enthaltend die mindestens eine Art von Metall; eine Verbindung, dotiert mit der mindestens einen Art von Metall; Kohlenstofflegierung; Kohlenstoff-Nanoröhrchen; Graphit; oder kohlenstoffbasiertes Material, dotiert mit Metallatomen und Stickstoffatomen, ist; und
der O₂-Freisetzungskatalysator auf der Seite der Elektrolytmembran, welche sich mit der zweiten Gasdiffusionselektrode in Kontakt befindet, geträgert ist.

4. Kohlendioxid-Permeationsvorrichtung nach Anspruch 1,
wobei:
der Katalysator einen ersten Katalysator, der als ein O₂-Reduktionskatalysator und ein O₂-Freisetzungskatalysator fungiert, und einem zweiten Katalysator, der als ein O₂-Reduktionskatalysator und ein O₂-Freisetzungskatalysator fungiert, einschließt,
der erste Katalysator auf der Seite der Elektrolytmembran, welche sich mit der ersten Gasdiffusionselektrode in Kontakt befindet, geträgert ist, und der erste Katalysator mindestens eine Art von Metall, ausgewählt aus Sc, Ti, V, Cr, Mn, Fe, Co, Ni, Cu, Zr, Nb, Mo, Ru, Rh, Pd, Ag, Ir, Pt und Au; eine Legierung, enthaltend die mindestens eine Art von Metall; ein Komplex, enthaltend die mindestens eine Art von Metall; eine Verbindung, dotiert mit der mindestens einen Art von Metall; Kohlenstofflegierung; Kohlenstoff-Nanoröhrchen; Graphit; oder kohlenstoffbasiertes Material, dotiert mit Metallatomen und Stickstoffatomen, ist;
der zweite Katalysator auf der Seite der Elektrolytmembran, welche sich in Kontakt mit der zweiten Gasdiffusionselektrode befindet, geträgert ist, und der zweite Katalysator mindestens eine Art von Metall, ausgewählt aus Sc, Ti, V, Cr, Mn, Fe, Co, Ni, Cu, Zr, Nb, Mo, Ru, Rh, Pd, Ag, Ir, Pt und Au; eine Legierung, enthaltend die mindestens eine Art von Metall; ein Komplex, enthaltend die mindestens eine Art von Metall; eine Verbindung, dotiert mit der mindestens einen Art von Metall; Kohlenstofflegierung; Kohlenstoff-Nanoröhrchen; Graphit; oder kohlenstoffbasiertes Material, dotiert mit Metallatomen und Stickstoffatomen, ist; und
die Gleichstromquelle zum Ändern der Polarität der zwischen der ersten Gasdiffusionselektrode und der zweiten Gasdiffusionselektrode angelegten Spannung eingerichtet ist.

5. Kohlendioxid-Permeationsvorrichtung nach einem der Ansprüche 1 bis 4, wobei mindestens eine der ersten Gasdiffusionselektrode und der zweiten Gasdiffusionselektrode eine mikroporöse Schicht, welche sich mit der Elektrolytmembran in Kontakt befindet, einschließt.

6. Kohlendioxid-Permeationsvorrichtung nach einem der Ansprüche 1 bis 5, weiter umfassend
eine erste Gas-Aufbewahrungskammer, eingerichtet zum Aufnehmen von Gas, welches sich in Kontakt mit der ersten Gasdiffusionselektrode befindet.

7. Kohlendioxid-Permeationsvorrichtung nach einem der Ansprüche 1 bis 6, weiter umfassend
eine zweite Gas-Aufbewahrungskammer, eingerichtet zum Aufnehmen von Gas, welches sich in Kontakt mit der zweiten Gasdiffusionselektrode befindet.

8. Kohlendioxid-Permeationsvorrichtung nach einem der Ansprüche 1 bis 7, weiter umfassend
eine Wasserzufuhr zum Zuführen des Wassers zu der Elektrolytmembran.

9. Verfahren zum Transportieren von Kohlendioxid, umfassend Schritte des:
Herstellens einer Kohlendioxid-Permeationsvorrichtung, einschließend
eine erste Gasdiffusionselektrode,
eine zweite Gasdiffusionselektrode,
eine Elektrolytmembran, welche sich in Kontakt mit und zwischen der ersten Gasdiffusionselektrode und der zweiten Gasdiffusionselektrode befindet und eine Anionenaustauschmembran ist,
eine Gleichstromquelle, eingerichtet zum Anlegen einer Spannung zwischen der ersten Gasdiffusionselektrode und der zweiten Gasdiffusionselektrode, und
einen Katalysator; und
Auswählens der ersten Gasdiffusionselektrode und der zweiten Gasdiffusionselektrode jeweils als eine Kathode und eine Anode und Anlegens der Spannung zwischen der ersten Gasdiffusionselektrode und der zweiten Gasdiffusionselektrode zum Beschleunigen von Absorption von Kohlendloxid in die Elektrolytmembran aus Gas in einer Umgebung der ersten Gasdiffusionselektrode und zum Beschleunigen von Emission von Kohlendioxid von der Elektrolytmembran in Gas in einer Umgebung der zweiten Gasdiffusionselektrode durch Herbeiführen einer Oxidationsreaktion von Wasser in der Elektrolytmembran,
wobei:
die Elektrolytmembran gegenüberliegende Seiten aufweist, welche sich jeweils in Kontakt mit der ersten Gasdiffusionselektrode und der zweiten Gasdiffusionselektrode befinden; und
der Katalysator auf mindestens einer der gegenüberliegenden Seiten der Elektrolytmembran geträgert ist.

10. Verfahren zum Transportieren von Kohlendioxid nach Anspruch 9, weiter umfassend einen Schritt des Auswählens der ersten Gasdiffusionselektrode und der zweiten Gasdiffusionselektrode jeweils als die Anode und die Kathode und des Anlegens der Spannung zwischen der ersten Gasdiffusionselektrode und der zweiten Gasdiffusionselektrode zum Beschleunigen von Absorption von Kohlendioxid in die Elektrolytmembran aus dem Gas in der Umgebung der zweiten Gasdiffusionselektrode und zum Beschleunigen von Emission von Kohlendioxid von der Elektrolytmembran in das Gas in der Umgebung der ersten Gasdiffusionselektrode durch Herbeiführen der Oxidationsreaktion des Wassers in der Elektrolytmembran.

11. Verfahren zum Transportieren von Kohlendioxid nach Anspruch 9 oder 10, wobei das Verfahren das Gestatten von
Permeation von Kohlendioxid in Gas bei einer Raumtemperatur, zugeführt zu der ersten Gasdiffusionselektrode, welche als die Kathode fungiert, zum Herbeiführen von Emission von Kohlendioxid bei einer Raumtemperatur von der zweiten Gasdiffusionselektrode, welche als die Anode fungiert,
umfasst.

## Revendications

1. Appareil de perméation de dioxyde de carbone, comprenant:
une première électrode de diffusion de gaz;
une deuxième électrode de diffusion de gaz;
une membrane à électrolyte en contact avec et située entre la première électrode de diffusion de gaz et la deuxième électrode de diffusion de gaz et est une membrane échangeuse d'anions;
une source de courant continu configurée pour appliquer une tension entre la première électrode de diffusion de gaz et la deuxième électrode de diffusion de gaz; et
un catalyseur,
l'appareil de perméation de dioxyde de carbone étant configuré pour:
accélérer l'absorption du dioxyde de carbone dans la membrane à électrolyte venant du gaz au voisinage de la première électrode de diffusion de gaz de manière à diminuer la concentration en dioxyde de carbone du gaz au voisinage de la première électrode de diffusion de gaz; et
accélérer l'émission du dioxyde de carbone venant de la membrane à électrolyte vers le gaz au voisinage de la deuxième électrode de diffusion de gaz en causant une réaction d'oxydation de l'eau dans la membrane à électrolyte de manière à enrichir le dioxyde de carbone dans le gaz au voisinage de la deuxième électrode de diffusion de gaz,
dans lequel:
la membrane à électrolyte a des faces opposées qui sont en contact avec respectivement la première électrode de diffusion de gaz et la deuxième électrode de diffusion de gaz; et
le catalyseur est supporté sur au moins l'une des faces opposées de la membrane à électrolyte.

2. Appareil de perméation de dioxyde de carbone selon la revendication 1, dans lequel:
le catalyseur comprend un catalyseur de réduction d'O₂
le catalyseur de réduction d'O₂ étant au moins un type de métal sélectionné parmi les suivants: Sc, Ti, V, Cr, Mn, Fe, Co, Ni, Cu, Zr, Nb, Mo, Ru, Rh, Pd, Ag, Ir, Pt et Au; un alliage comprenant le au moins un type de métal; un complexe comprenant le au moins un type de métal; un composé dopé avec le au moins un type de métal; un alliage carboné; un nanotube de carbone; du graphite; ou un matiériau à base de carbone dopée par des atomes de métal et des atomes d'azote; et le catalyseur de réduction d'O₂ est supporté sur la face de la membrane à électrolyte qui est en contact avec la première électrode de diffusion de gaz.

3. Appareil de perméation de dioxyde de carbone selon la revendication 1 ou 2,
dans lequel:
le catalyseur comprend un catalyseur de dégagement d'O₂
le catalyseur de dégagement d'O₂ étant au moins un type de métal sélectionné parmi les suivants: Sc, Ti, V, Cr, Mn, Fe, Co, Ni, Cu, Zr, Nb, Mo, Ru, Rh, Pd, Ag, Ir, Pt et Au; un alliage comprenant le au moins un type de métal; un complexe contenant le au moins un type de métal; un composé dopé avec le au moins un type de métal; un alliage carboné; un nanotube de carbone; du graphite; ou un matériau à base de carbone dopée par des atomes de métal et des atomes d'azote; et le catalyseur de dégagement d'O₂ est supporté sur la face de la membrane à électrolyte qui est en contact avec la deuxième électrode de diffusion de gaz.

4. Appareil de perméation de dioxyde de carbone selon la revendication 1, dans lequel:
le catalyseur comprend un premier catalyseur qui fonctionne comme un catalyseur de réduction d'O₂ et un catalyseur de dégagement d'O₂ et un deuxième catalyseur qui fonctionne comme un catalyseur de réduction d'O₂ et
un catalyseur de dégagement d'O₂,
le premier catalyseur est supporté sur la face de la membrane à électrolyte qui est en contact avec la première électrode de diffusion de gaz, et le premier catalyseur est au moins un type de métal sélectionné parmi les suivants: Sc, Ti, V, Cr, Mn, Fe, Co, Ni, Cu, Zr, Nb, Mo, Ru, Rh, Pd, Ag, Ir, Pt et Au; un alliage comprenant le au moins un type de métal; un complexe comprenant le au moins un type de métal; un composé dopé avec le au moins un type de métal; un alliage carboné; un nanotube de carbone; du graphite; ou un matériau à base de carbone dopée avec des atomes de métal et des atomes d'azote;
le deuxième catalyseur est supporté sur la face de la membrane à électrolyte qui est en contact avec la deuxième électrode de diffusion de gaz, et le deuxième catalyseur est au moins un type de métal sélectionné parmi les suivants: Sc, Ti, V, Cr, Mn, Fe, Co, Ni, Cu, Zr, Nb, Mo, Ru, Rh, Pd, Ag, Ir, Pt et Au; un alliage comprenant le au moins un type de métal; un complexe comprenant le au moins un type de métal; un composé dopé avec le au moins un type de métal; un alliage carboné; un nanotube de carbone;
du graphite; ou un matériau à base de carbone dopée par des atomes de métal et des atomes d'azote; et
la source de courant continu est configurée pour inverser la polarité de la tension appliquée entre la première électrode de diffusion de gaz et la deuxième électrode de diffusion de gaz.

5. Appareil de perméation de dioxyde de carbone selon l'une quelconque des revendications 1 à 4, dans lequel au moins l'une de la première électrode de diffusion de gaz et de la deuxième électrode de diffusion de gaz comprend une couche microporeuse qui est en contact avec la membrane à électrolyte.

6. Appareil de perméation de dioxyde de carbone selon l'une quelconque des revendications 1 à 5, comprenant en outre
une première chambre de détention de gaz configurée pour loger le gaz en contact avec la première électrode de diffusion de gaz.

7. Appareil de perméation de dioxyde de carbone selon l'une quelconque des revendications 1 à 6, comprenant en outre
une deuxième chambre de détention de gaz configurée pour loger le gaz en contact avec la deuxième électrode de diffusion de gaz.

8. Appareil de perméation de dioxyde de carbone selon l'une quelconque des revendications 1 à 7, comprenant en outre
une arrivée d'eau pour alimenter en eau la membrane à électrolyte.

9. Procédé de transport de dioxyde de carbone, comprenant les étapes suivantes:
préparation d'un appareil de perméation de dioxyde de carbone comprenant
une première électrode de diffusion de gaz,
une deuxième électrode de diffusion de gaz,
une membrane à électrolyte en contact avec et située entre la première électrode de diffusion de gaz et la deuxième électrode de diffusion de gaz et est une membrane échangeuse d'anions,
une source de courant continu configurée pour appliquer une tension entre la première électrode de diffusion de gaz et la deuxième électrode de diffusion de gaz, et
un catalyseur, et
sélection de la première électrode de diffusion de gaz et de la deuxième électrode de diffusion de gaz comme respectivement cathode et anode et
application de la tension entre la première électrode de diffusion de gaz et la deuxième électrode de diffusion de gaz pour accélérer l'absorption du dioxyde de carbone dans la membrane à électrolyte venant du gaz au voisinage de la première électrode de diffusion venant du gaz et pour accélérer l'émission du dioxyde de carbone venant de la membrane à électrolyte vers le gaz au voisinage de la deuxième électrode de diffusion de gaz en causant une réaction d'oxydation de l'eau dans la membrane à électrolyte,
dans lequel:
la membrane à électrolyte a des faces opposées qui sont en contact avec respectivement la première électrode de diffusion de gaz et la deuxième électrode de diffusion de gaz; et
le catalyseur est supporté sur au moins l'un des faces opposées de la membrane à électrolyte.

10. Procédé de transport de dioxyde de carbone selon la revendication 9, comprenant en outre une étape où l'on sélectionne la première électrode de diffusion de gaz et la deuxième électrode de diffusion de gaz comme respectivement anode et cathode et l'on applique la tension entre la première électrode de diffusion de gaz et la deuxième électrode de diffusion de gaz pour accélérer l'absorption de dioxyde de carbone dans la membrane à électrolyte venant du gaz au voisinage de la deuxième électrode de diffusion de gaz et pour accélérer l'émission du dioxyde de carbone venant de la membrane à électrolyte vers le gaz au voisinage de la première électrode de diffusion de gaz en causant une réaction d'oxydation de l'eau dans la membrane à électrolyte.

11. Procédé de transport de dioxyde de carbone selon la revendication 9 ou 10, dans lequel le procédé comprend permettre
une perméation de dioxyde de carbone en gaz à température ambiante fourni à la première électrode de diffusion de gaz fonctionnant en tant que cathode pour causer l'émission de dioxyde de carbone à température ambiante venant de la deuxième électrode de diffusion de gaz fonctionnant en tant qu'anode.
